# EUROPEAN PATENT APPLICATION

(11) **EP 2 093 249 A1**
(43) Date of publication of application: **26.08.2009**
(21) Application number: 08151678.3
(22) Date of filing: 20.02.2008
(51) Int. Cl.: C08K 3/22, C08K 3/26, C08K 3/38, C08L 27/06

(54) **Unplasticized PVC composition**

(71) Applicant: Pipelife Nederland B.V., 1601 MA Enkhuizen (NL)
(72) Inventor: de Boer, Jan, 1601 LJ Enkhuizen (NL)
(74) Representative: Swinkels, Bart Willem

(57) **Abstract**

The present invention relates to an unplasticized PVC composition comprising poly(vinyl chloride), calcium carbonate, zinc borate, and one or more metal hydroxides selected from the group consisting of aluminium hydroxide and magnesium hydroxide.

This composition is suitable for producing unplasticized PVC articles, in particular unplasticized PVC tube-shaped articles having both favourable mechanical properties and desirable smoke suppressing properties and flame retardancy.

## Description

### FIELD OF THE INVENTION

The present invention relates to an unplasticized PVC composition. This composition is suitable for producing unplasticized PVC articles, in particular unplasticized PVC tube-shaped articles.

### BACKGROUND OF THE INVENTION

Polyvinyl chloride has a relatively high chlorine content. Therefore, many PVC compositions have good flame retardancy. This is especially true for unplasticized PVC compositions. Unplasticized PVC is a PVC composition comprising no added plasticizers, or comprising added plasticizers in an amount of up to max. 3 phr. Thus, in unplasticized PVC, the inherently favourable flame retardant properties of poly(vinyl chloride) are not negatively influenced by plasticizers to a significant extent.

Unplasticized PVC compositions and articles having flame retardant and smoke suppressing properties are known in the art. In Thomas and Harvey, Polymers & Polymer Composites 1999, Vol. 7, pp. 545-553, a standard Pb-stabilised PVC window profile recipe is disclosed. The recipe contains 7 phr of an acrylic impact modifier, 5 phr of a flame retardant and 10 phr of a filler. Herein, for example, the flame retardant may be chosen as zinc borate. As a filler, for example, alumina trihydrate (= aluminium hydroxide), is disclosed.

### SUMMARY OF THE INVENTION

Given the ever increasing requirements of fire regulations all over the world, there is still room for improving the fire retardant properties of unplasticized PVC. Moreover, there is an increasing body of evidence which suggests a strong positive correlation between the smoke suppressing properties of a material, and fire safety aspects thereof. Hence, there is also a need to further improve the smoke suppressing properties of unplasticized PVC compositions.

Furthermore, it was found that the compositions disclosed in Thomas and Harvey are less suitable for obtaining tube-shaped unplasticized PVC articles having favourable properties.

Thus, there still exists a need for alternative unplasticized PVC articles and alternative unplasticized PVC compositions from which such articles, especially tube-shaped unplasticized PVC articles, can be obtained. It is preferred that these compositions and articles made thereof have more favourable properties than prior art compositions and articles made thereof, especially with regard to a more favourable balance of smoke suppressing properties, flame retardant properties and mechanical properties.

The invention therefore proposes an unplasticized PVC composition comprising poly(vinyl chloride), calcium carbonate, zinc borate, and one or more metal hydroxides selected from the group consisting of aluminium hydroxide and magnesium hydroxide.

It was found that the present unplasticized PVC composition is especially suitable for preparing tube-shaped unplasticized PVC articles that may have both desirable mechanical properties and sufficient smoke suppressing and flame retardant properties.

The present invention also provides a use of the unplasticized PVC composition for producing an unplasticized PVC article. In an embodiment, the unplasticized PVC article is obtainable by extrusion or injection moulding. The present invention preferably provides a tube-like article obtainable by providing the unplasticized PVC composition with a tube-like shape, such as by extrusion or injection moulding.

The tube-like article is preferably obtainable by extrusion of the unplasticized PVC composition according to the present invention, especially when the tube-like article is an electrical conduit.

In another embodiment, especially when the tube-like article according is a fitting for an electrical conduit, it is preferred that the tube-like article is obtainable by injection moulding of the unplasticized PVC composition.

### DETAILED DESCRIPTION OF THE INVENTION

### Definitions used in the present invention

The term **"PVC"** relates to a composition comprising poly(vinyl chloride) and further additives mixed therewith or dispersed therein.

The unit **"phr"** is known in the art, and stands for "parts by weight per hundred weight parts of resin." According to the present invention, the resin is poly(vinyl chloride) *per* se. Thus, by means of example, a composition consisting of 200 g of poly(vinyl chloride), 10 g of calcium carbonate, and 6 g of zinc borate contains the indicated ingredients in the following amounts: poly(vinyl chloride): 100 phr; calcium carbonate: 5 phr; zinc borate: 3 phr.

The term **"unplasticized PVC" or "unplasticized PVC composition"** is known in the art. Unplasticized PVC is for instance obtainable by thoroughly mixing a poly(vinyl chloride) with one or more further additives which are suitable for the production of unplasticized PVC. The unplasticized PVC according to the present invention may comprise a plasticizer suitable for PVC in an amount of up to about 3 phr, more preferably in an amount of up to about 1 phr. Suitable plasticizers for PVC are, for example, phthalates, more in particular dialkyl phthalates, especially diisoalkyl phtalates. Commonly used diisoalkylalkylphtaltes range from diisoheptylphthalate to diisodecylphtalate. It is preferred that the unplasticized PVC composition according to the present invention contains less than about 0.5 phr of an added plasticizer, especially a dialkyl phthalate. Most preferably, the unplasticized PVC composition is essentially free of an added plasticizer, especially of an added dialkyl phthalate.

The term **"unplasticized PVC article"** relates to the unplasticized PVC composition, provided with a shape. A tube-shaped unplasticized PVC article, or tube-shaped article is a tube-like article that may be obtainable by providing the unplasticized PVC composition with a tube-like shape. Shaping of the unplasticized PVC composition is performed using commonly known methods, especially comprising processing the unplasticized PVC composition at elevated temperatures, especially at a temperature between about 175 and 210 °C. Preferred methods for shaping the PVC-composition include extrusion and injection moulding.

The **calcium carbonate** according to the present invention may be selected from the group consisting of calcium carbonate comprising coated calcium carbonate particles and uncoated calcium carbonate particles. The calcium carbonate particles may be of a natural or of a synthetic origin. Synthetic calcium carbonate particles are preferably obtained by precipitation, especially by precipitation of Ca(OH)₂ in the presence of CO₂, optionally in the presence of a surface coating agent. Preferably, the precipitated carbonate may be obtained as fine precipitated calcium carbonate (FPCC) or ultrafine precipitated calcium carbonate (UPCC). FPCC particles may have a mean particle size (as determined using air permeability) which is smaller than about 400 nm. UPCC particles may have a mean particle size (as determined using air permeability) which is smaller than about 100 nm. Natural calcium carbonate particles are preferably obtained as comminuted natural chalk and typically have a median particle size from about 10 µm down to about 1 µm, and normally have a wide particle size distribution.

If the calcium carbonate particles have been provided with a coating, said coating preferably comprises a C1-C25 organic acid or a salt thereof, preferably stearic acid or a salt thereof, for example calcium stearate. The coating content generally ranges between about 0.1 and 10%, preferably between about 0.5 and 4% by weight with respect to the weight of the calcium carbonate.

In making calculations of the calcium carbonate content in the unplasticized PVC composition, the amount of coating is included.

The calcium carbonate may comprise a mixture of coated and uncoated calcium carbonate partices. Furthermore, the calcium carbonate may comprise a mixture of natural and synthetic calcium carbonate particles. It is preferred that the calcium carbonate comprises synthetic calcium carbonate, which is preferably precipitated calcium carbonate.

The **zinc borate** is specified as *x*ZnO.*y*B₂O₃.*z*H₂O, wherein in a preferred embodiment, *x* = 2, *y* = 3 and *z* = 3.5. However, other forms of zinc borate may be used, preferably those having the above-mentioned elemental composition with 1 ≤*x* ≤6, 1 ≤*y* ≤ en 1 ≤ *z* ≤ 4, and mixtures thereof. Herein, it is preferred that the ratio x:y:z ranges between 1:1:1 and 1:3:3. It is most preferred that the ratio x:y:z ranges between 1:1:1 and 1:2:2. In the preferred embodiment wherein *x* = 2, *y* = 3 and *z* = 3.5, the ratio x:y:z is 1:1.5:1.75, which is in the most preferred range. The zinc borate may comprise a mixture of two or more forms of zinc borate.

The **aluminium hydroxide** (or alumina trihydrate, or ATH) and the **magnesium hydroxide** according to the present invention are specified as Al(OH)₃ and Mg(OH)₂, respectively.

The term **unplasticized PVC additive** relates to one or more additives which are suitable for the production of unplasticized PVC other than the calcium carbonate, the zinc borate, the aluminium hydroxide and the magnesium hydroxide according to the present invention. Such an additive is preferably selected from the group consisting of a one-pack, a processing aid, a pigment, an impact modifier, and optionally a plasticizer. However, the plasticizer is preferably absent.

Herein, a **one-pack** is a composition comprising one or more stabilizers which are preferably selected from the group consisting of an organic stabilizer, a calcium zinc stabilizer, a tin stabilizer, and a lead stabilizer. Herein, a stabilizer is a compound or a composition which may retard, diminish or prevent thermal degradation of PVC, especially with regard to dark coloration, for example as determined in ISO 305. Stabilizers for PVC are known to the person skilled in the art and are disclosed in, for example, in Plastics Additives Handbook, 5th Edition, edited by Hans Zweifel, Hanser, Munich, ISBN 3-446-19579-3, Chapter 3, which chapter is incorporated by reference herein.

The organic stabiliser is preferably a stabilizer which is essentially free of lead, tin and zinc. It is preferred that the organic stabiliser comprises a calcium salt, especially a calcium soap, such as calcium stearate. The organic stabilizer preferably further comprises one or more compounds selected from the group of diphenylthiourea, mercapto-benzimidazole, a mercaptane, an alkylphosphite, a beta-diketone, an epoxidized fatty acid ester, an aminouracil. Alternatively or additionally, in a particularly preferred embodiment, the organic stabilizer comprises a perchlorate and an alkanolamine, wherein the alkanolamine is preferably uracil.

The lead stabiliser is a stabilizer comprising one or more lead compounds, which are preferably selected from the group consisting of a primary lead salt and a lead soap. Preferably, the lead stabilizer comprises a mixture of the primary lead salt and the lead soap. The primary lead salt is preferably selected from the group consisting of tetrabasic lead sulphate, tribasic lead sulphate, and dibasic lead sulphate. The lead soap is preferably selected from the group consisting of neutral lead stearate and dibasic lead stearate. Preferably, the lead stabiliser further comprises a calcium soap, such as calcium stearate or calcium laurate.
The calcium zinc stabilizer is a stabilizer which comprises a calcium salt and a zinc salt, wherein the calcium salt is preferably selected as a calcium halide and/or a calcium carboxylate, and wherein the zinc salt is preferably selected as a zinc halide and/or a zinc carboxylate. The carboxylate is preferably a soap, such as stearate or laurate.

The tin stabilizer is a stabiliser which comprises an organotin compound, such as an organotin carboxylate, an organotin mercaptide, an organotin sulfide, or a mixture thereof. The tin stabilizer preferably further comprises a calcium soap, such as calcium stearate.

As a one-pack comprising an organic stabiliser, for example, Naftosafe^{®} RRX 1607/2 OBS^{®} (ex Chemson) may be used. As a one-pack comprising a tin stabiliser, for example, Thermolite^{®} 8000 (ex Arkema) may be used. As a one-pack comprising a lead stabiliser, for example, Naftomix^{®} RRX 2166 (ex Chemson) may be used. As a one-pack comprising a calcium zinc stabilizer, for example, Baeropan^{®} BPR9628R ex Bärlocher may be employed.

Preferably, the one-pack additionally comprises one or more costabilizers, which are preferably selected from the group consisting of an acid scavenger and a polyol. The acid scavenger is preferably a compound selected from the group consisting of a zeolite, a hydrocalumite, a hydrotalcite, a magnesium soap and a barium soap.

The one-pack preferably additionally comprises a lubricant. A lubricant is known to the person skilled in the art. The lubricant is preferably a wax, for example a paraffin wax, a montan wax, a PE wax or a PP wax. The wax preferably melts between about 50 and 100 °C. Other preferred lubricants include fatty alcohols, esters of fatty alcohols, fatty acids, fatty acid amides, fatty acid esters, and fluoropolymers.

The one-pack may further comprise an antioxidant (such as Bisphenol A), a UV light stabiliser and/or a biocide.
In a preferred embodiment, the one-pack comprises:
- a stabiliser;
- a lubricant; and
- optionally a costabilizer selected from the group consisting of a polyol, a zeolite, a hydrocalumite a hydrotalcite, a magnesium soap and a barium soap;
wherein the stabilizer, the optional costabilizer and the lubricant together provide at least 50 wt.%, more preferably at least 70 wt.%, most preferably at least 80 wt.% of the total weight of the one-pack. It is preferred that the stabiliser is an organic stabilizer or a calcium zinc stabilizer, or a mixture thereof; according to this embodiment, the one-pack preferably further comprises the costabilizer.

The **processing aid** is an additive which enhances the elasticity of the unplasticized PVC composition in a melt. Processing aids are known to the person skilled in the art, see, for example, PVC Handbook, edited by C.E. Wilkes, J.W. Summers and C.A. Daniels, ISBN-3-44622714-8, Hanser, Munich, 2005, pp. 203-212, which pages are incorporated herein by reference. Preferably, the processing aid comprises or consists of a poly(methyl methacrylate) homo- or copolymer, which is preferably not grafted to an acrylate (co)polymer. The molecular weight of poly(methyl methacrylate) polymer is preferably such that M_{w} > 10⁶. A suitable processing aid is commercially available, for example as Baerorapid 10F (*ex* Bärlocher) or as Degalan^{®} 10F (*ex* Degussa). Other commercially available processing aids include PARALOID^{™} K-125 (*ex* Rohm and Haas Company) and Kane Ace PA-310 (ex Kaneka Corporation).

The **pigment** is an organic or inorganic white, black or colored powdered or otherwise comminuted material which is practically insoluble in a PVC melt. The pigment is known to the person skilled in the art, and is further described in, for example, Plastics Additives Handbook, 5th Edition, edited by Hans Zweifel, Hanser, Munich, pp. 816-817, which pages are incorporated by reference herein.

The **impact modifier** is known to the person skilled in the art and is further described in, for example, the Kirk-Othmer Encyclopedia of Chemical Technology, 4th edition, vol. 24, pp. 1031-1036, which pages are herein incorporated by reference. The impact modifier is preferably an acrylonitrile-butadiene-styrene-copolymer, an acrylic impact modifier, a chlorinated polyethylene (CPE), or a mixture thereof. The acrylic impact modifier is, for example described, in PVC Handbook, edited by C.E. Wilkes, J.W. Summers and C.A. Daniels, ISBN-3-44622714-8, Hanser, Munich, 2005, pp. 226-227, which is herein incorporated by reference.

The acrylic impact modifier preferably comprises a C1-C20 alkylacrylate. Most preferably, the acrylic impact modifier is a core-shell impact modifier obtainable by grafting a hard polymer onto rubbery core particles. The primary rubbery core particles are preferably produced by emulsion polymerisation, especially by emulsion polymerisation of a monomer or a monomer mixture comprising a C1-C20 alkylacrylate, more preferably a C4-C18 alkylacrylate, such as butylacrylate. The hard polymer is preferably a poly(methyl methacrylate) homo- or copolymer. The acrylic impact modifier is commercially available, for example, as Kane Ace FM50 from Kaneka Corporation or PARALOID™ KM-366 from Rohm and Haas Company.

The CPE is, for example, further described in said PVC Handbook, pp. 228-229, which is herein incorporated by reference. The CPE is available, for example, as Tyrin™ 7000 from The Dow Chemical Company or ONGRO CPE^{®} 3602N from BorsodChem Rt.

The **plasticizer** is known to the person skilled in the art, and is for example described in Kirk-Othmer Encyclopedia of Chemical Technology, 4th edition, vol. 24, pp. 1031-1036, and also in PVC Handbook, edited by C.E. Wilkes, J.W. Summers and C.A. Daniels, ISBN-3-44622714-8, Hanser, Munich, 2005, pp. 173-199. The indicated pages in Kirk Othmer and in PVC Handbook are herein incorporated by reference.

### Specific embodiments of the composition according to the present invention.

Calcium carbonate. Advantageously, the calcium carbonate is present in an amount of about 2-10 phr. If the calcium carbonate is present in an amount of at least about 2 phr, it was found that a tube-like article obtainable by providing the unplasticized PVC composition with a tube-like shape has a favourable impact resistance. If the calcium carbonate is present in an amount exceeding about 10 phr, it was found that the bending strength of a tube-like article obtainable by providing the unplasticized PVC composition with a tube-like shape unfavourably decreased, resulting in enhanced failure during bending tests. It was found that an optimal balance of impact resistance and bending strength could be obtained when the amount of calcium carbonate in the unplasticized PVC composition ranges between about 5-8 phr.

In a particularly favourable embodiment, the calcium carbonate comprises, or more favourably consists of, precipitated calcium carbonate. The precipitated calcium carbonate is preferably a coated UPCC. Accordingly, the unplasticized PVC composition, during a burning test, further provides for a reduced emission of harmful vapours, especially of black smoke and of HCl vapours, as compared with a unplasticized PVC composition wherein the calcium carbonate consists of natural chalk. Herein, "black smoke" is the same kind of smoke which evolves and which is determined in, for example, burning tests IEC 61034-1:2005 and 61034-2:2005.

Suitable precipitated calcium carbonate may be commercially available, for example as uncoated FPCC, uncoated UPCC, or as coated UPCC particles. Suitable uncoated FPCC particles are available, for example, as Socal® 90A, Socal® P1V, or Socal® P2. Suitable uncoated UPCC particles are available, for example, as Socal® 31, U1, and U3. Suitable coated UPCC particles are available, for example, as Socal® U1S2 or as Winnofil® S. Herein, Winnofil® and Socal® are registered trademarks of Solvay. A suitable coated natural chalk is available as Omyalite® 90T. Herein, Omyalite® is a registered trademark of Omya.

Zinc borate. Preferably, the zinc borate is present in an amount of about 1-7 phr. Accordingly, it was found that the flame retardant and smoke suppressing properties of the unplasticized PVC composition are acceptable, whilst sufficient heat stability is obtained of the composition during processing thereof at elevated temperatures, especially at a temperature between about 175 and 210 °C, and in particular during extrusion thereof. A level of zinc borate in an amount of about 3-6 phr may provide for an optimum combination of favourable flame retardant and smoke suppressing properties of the unplasticized PVC composition, with robust heat stability of the unplasticized PVC composition during processing of the composition at elevated temperatures, especially at a temperature between about 175 and 210 °C, and in particular during extrusion thereof. A suitable zinc borate according to the present invention is available, for example as Firebrake ZB^{®} (ex Luzenac). This zinc borate has the following elemental composition: *x*ZnO.*y*B₂O₃.*z*H₂O, wherein *x* = 2, *y* = 3 and *z* = 3.5.

Aluminium hydroxide, magnesium hydroxide. It is further preferred that the aluminium hydroxide and/or the magnesium hydroxide taken together are present in a total amount of about 1-9 phr. It was found that in this concentration window, the aluminium hydroxide and/or the magnesium hydroxide act to further improve smoke suppressing and/or flame retardancy properties of the unplasticized PVC composition, without incurring significant thermal degradation of the unplasticized PVC composition during processing thereof at elevated temperatures, especially at a temperature between about 175 and 210 °C, and in particular during extrusion thereof.

Preferably, the aluminium hydroxide and/or the magnesium hydroxide taken together are present in a total amount of about 3-6 phr. This embodiment may provide for optimal improvement of smoke suppressing properties and/or of flame retardancy of the unplasticized PVC composition, whilst the unplasticized PVC composition can be robustly processed at elevated temperatures, especially at a temperature between about 175 and 210 °C, and in particular extruded, without significant degradation to occur to the unplasticized PVC.

The aluminium hydroxide according to the present invention is suitably available as, for example, Apyral 40CD (ex Nabaltec). The magnesium hydroxide according to the present invention is suitably available as, for example, Apymag 60S (ex Nabaltec). Poly(vinyl chloride). The poly(vinyl chloride) according to the present invention is preferably obtainable by suspension polymerisation. Accordingly, the unplasticized PVC composition provides for optimal mechanical properties of a tube-shaped unplasticized PVC article obtainable by providing the unplasticized PVC composition with a tube-like shape. The Kw value of the poly(vinyl chloride) according to the present invention suitably ranges between about 55 and 70. If the unplasticized PVC electrical conduit is to be obtained, the Kw value of the poly(vinyl chloride) preferably ranges between about 58 and 70, more preferably between about 58 and 69, most preferably between about 64 and 69. If the unplasticized PVC fitting for an electrical conduit is to be obtained, the Kw value of the poly(vinyl chloride) preferably ranges between about 57 and 68. Herein, the Kw value is a number which correlates with the molecular weight of the poly(vinyl chloride); see, for example, DIN 53726. The concept of the Kw value is known to the person skilled in the art and is commonly used to characterise the molecular weight of commercially available poly(vinyl chloride) grades. A suitable poly(vinyl chloride) according to the present invention, wherein the poly(vinyl chloride) is obtained by suspension polymerisation, is available, for example as Solvin® 266. The Kw value of this PVC is 66. Alternatively, Solvin® 267 may be suitably used; the Kw value of this PVC is 67. Solvin® is a registered trademark of Solvay. Unplasticized PVC additives. The unplasticized PVC composition preferably comprises about 1-10 phr of one or more unplasticized PVC additives. It is preferred that at least about 1 phr of the one or more unplasticized PVC additives is present as a one-pack. Accordingly, the unplasticized PVC composition can be more conveniently processed, especially at elevated temperatures, preferably between about 175 and 210 °C.

In an embodiment, the unplasticized PVC additive according to the present invention is preferably selected from the group consisting of:
- a one-pack: 1 - 6 phr, preferably 2-4 phr;
- a processing aid: 0-3 phr, preferably 0.5 - 1.5 phr.
- a pigment: 0-1 phr, preferably 0.3-0.7 phr;
- an impact modifier: 0-10 phr, preferably 3-8 phr;
- a plasticizer: 0-3 phr, more preferably 0-1 phr, most preferably absent.

According to this embodiment, the content of the unplasticized PVC additives in the unplasticized PVC composition preferably ranges between about 1-23 phr.

In a preferred embodiment, the impact modifier is absent. The presence of the impact modifier may enhance the production of smoke and/or harmful vapours during burning of the unplasticized PVC composition. In another preferred embodiment, especially when an increased impact resistance is required, the presence of the impact modifier at about 3-8 phr may provide for a preferred balance of mechanical properties *versus* smoke suppressing properties and/or release of harmful vapours during burning of the composition.

In one embodiment, especially where the unplasticized PVC composition is embodied as a conduit, and where it is desired that the conduit has a favourable balance of mechanical properties and cost, the impact modifier is preferably absent. In this embodiment, the plasticizer is preferably absent as well. The processing aid is preferably present in an amount of up to about 1 phr. According to this embodiment, the remaining unplasticized PVC additives (i.e. preferably the one-pack and the pigment) together are preferably present in an amount of about 1-7 phr. According to this embodiment, the unplasticized PVC composition preferably comprises an unplasticized PVC additive in a total amount of about 1-8 phr, more preferably between about 1-7 phr, more preferably between about 2 - 7 phr. It has been found that an unplasticized PVC composition comprising between about 2-7 phr of one ore more unplasticized PVC additives may provide for the most optimal balance of mechanical properties, smoke suppressing properties, flame retardant properties and cost.

Preferred composition. The unplasticized PVC composition preferably consists of:
a. Calcium carbonate in an amount of 2-10 phr, preferably 5-8 phr;
b. Zinc borate in an amount of 1-7 phr, preferably 3-6 phr;
c. Aluminium hydroxide and/or magnesium hydroxide in a total amount of 1-9 phr, preferably 3-6 phr;
d. One or more unplasticized PVC additives in a total amount of 1-23 phr, more preferably in an amount of 1-8 phr and
e. Poly(vinyl chloride) to 100% by weight of the total composition.

It was found that said composition has optimal properties, in that fire retardancy and smoke suppressing properties were found to be excellent, whilst the composition has very good processability at elevated temperatures, especially between about 175 and 210 °C. Regarding processability, the composition is particularly favourably extruded into tube-shaped articles at the indicated temperature range without noticeable decomposition of and/or burn damage to the composition and/or to the articles to occur. Moreover, said tube-shaped articles were found to have excellent mechanical properties, in particular with regard to bending strength and impact resistance.

Method to produce unplasticized PVC. In one embodiment, the unplasticized PVC composition is favourably obtained by a method comprising:
a. mixing the poly(vinyl chloride), the calcium carbonate, the zinc borate, the metal hydroxide selected from the group consisting of aluminium hydroxide and magnesium hydroxide, and optionally the one or more unplasticized PVC additives, to form a blend; and
b. extruding this blend at a temperature of about 175 - 210 °C, preferably at about 180-200 °C,
wherein the poly(vinyl chloride), before mixing, is present as particles, preferably as a powder.

In an embodiment, the extruded blend obtained in step (b.) is further shaped in an article, preferably a tube-like article. Alternatively, the extruded blend obtained in step (b.) may be further converted into a granulate.

Tube-like article. The present invention provides a tube-like article obtainable by providing the unplasticized PVC composition with a tube-like shape. In a preferred embodiment, the tube-like article is obtainable by extrusion of the unplasticized PVC composition. Said tube-like article is preferably an electrical conduit. Said conduit is preferably embodied as a smooth conduit or as a corrugated conduit.

In another preferred embodiment, the tube-like article is obtainable by injection moulding of the unplasticized PVC composition. Said tube-like article is preferably a fitting for an electrical conduit.

The present invention especially provides for a method to produce the unplasticized PVC tube-like article, the method comprising:
a. extruding the unplasticized PVC composition according to the present invention at a temperature of about 175 - 210 °C,
b. allowing the shaped material thus obtained to cool, preferably by immersion in water.

The present method is particularly suitable for producing the unplasticized PVC electrical conduit according to the present invention.

Alternatively, and preferably, the present invention also provides for a method to produce the unplasticized PVC tube-like article, the method comprising :
a. mixing the poly(vinyl chloride), the calcium carbonate, the zinc borate, the metal hydroxide selected from the group consisting of aluminium hydroxide and magnesium hydroxide, and optionally the one or more unplasticized PVC additives to form a blend,
b. extruding this blend at a temperature of about 175 - 210 °C, preferably at about 180-200 °C,
c. shaping the extruded blend thus obtained;
d. allowing the shaped material thus obtained to cool down, preferably by immersion in water,

The present method is particularly suitable for producing the unplasticized PVC electrical conduit according to the present invention.

In an embodiment, the present invention additionally provides for a method to produce the tube-like article, the method comprising :
a. injection moulding the unplasticized PVC composition at a temperature of about 175-205 °C;
b. allowing the shaped material thus obtained to cool down.

Advantageously, the tube-like article thus obtained is the fitting for an electrical conduit. The fitting may for example comprise a bend or a coupler.
Alternatively, the present invention provides for a method to produce the unplasticized PVC tube-like article, the method comprising :
a. mixing the poly(vinyl chloride), the calcium carbonate, the zinc borate, the metal hydroxide selected from the group consisting of aluminium hydroxide and magnesium hydroxide, and optionally the one or more unplasticized PVC additives to form a blend;
b. injection moulding this blend at a temperature of about 175-205 °C;
c. allowing the shaped material thus obtained to cool down.

Advantageously, the tube-like article thus obtained is the fitting for an electrical conduit.

Dry blend. The present invention also provides for a dry blend obtainable by mixing, at a temperature of preferably between about 50-130 °C, the poly(vinyl chloride), the calcium carbonate, the zinc borate, the metal hydroxide selected from the group consisting of aluminium hydroxide and magnesium hydroxide, and optionally the one or more unplasticized PVC additives. Herein, the poly(vinyl chloride) is preferably present as a poly(vinyl chloride) powder.

### EXAMPLES

### Example 1. Examination of smoke density.

Flame retardant and smoke suppressing properties of several unplasticized PVC electrical conduits were tested according to IEC 61034-1:2005 and 61034-2:2005. A single test was carried out on each conduit. The conduits were considered as cables with diameter 10 mm, and 3 lengths of 1.00 m were tested. For stability, the conduits were filled with a steel rod, 8 mm diameter. Before testing, the specimens were conditioned at a temperature of (23 ± 2) C and a relative humidity of (50 ± 5)% according to EN 13238:2002.

*Materials.* The following electrical conduits were tested:

Example A1: unplasticized PVC smooth electrical conduit, outside diameter 18.7 mm, wall thickness 1.2 mm. The conduit has been obtained by extrusion of the following composition:

| **Ingredient** | **Amount (phr)** |
|---|---|
| Poly(vinyl chloride) (Solvin^{®} 266 *ex* Solvin) | 100.0 |
| Neutral lead stearate | 1.6 |
| Calcium stearate | 0.5 |
| Paraffin wax having a melting point of *ca.* 55°C | 0.5 |
| Bisphenol A | 0.050 |
| Pigment (Yellow PS 2.1.79 *ex* Clariant) | 0.5 |
| Calcium carbonate (Omyalite 90T ex Omya) | 7.2 |

N.B. The neutral lead stearate, the calcium stearate, the paraffin wax and the Bisphenol A together are to be considered a one-pack.

Example A2: unplasticized PVC smooth electrical conduit according to the present invention, outside diameter 18.7 mm, wall thickness 1.2 mm. The conduit has been obtained by extrusion of the following composition:

| **Ingredient** | **Amount (phr)** |
|---|---|
| Poly(vinyl chloride) (Solvin^{®} 266, *ex* Solvin) | 100.0 |
| Neutral lead stearate | 1.6 |
| Calcium stearate | 0.5 |
| Paraffine wax having a melting point of *ca.* 55°C | 0.5 |
| Bisphenol A | 0.050 |
| Pigment (Yellow PS 2.1.79 ex Clariant) | 0.5 |
| Calcium carbonate (Socal^{®} U1S2 *ex* Solvay) | 7.2 |
| Zinc borate (Firebrake ZB^{®} *ex* Luzenac) | 3.2 |
| Aluminium hydroxide (Apyral 40 CD^{®} *ex* Nabaltec) | 5.6 |

N.B. The neutral lead stearate, the calcium stearate, the paraffine and the bisphenol A together are to be considered a one-pack.

Example B1: unplasticized PVC corrugated electrical conduit, outside diameter 14.9 mm, wall thickness 1.6 mm (including profile). The conduit has been obtained by extrusion, followed by after treatment in a corrugator, of the following composition:

| **Ingredient** | **Amount (phr)** |
|---|---|
| Poly(vinyl chloride) (Solvin^{®} 264, ex Solvin) | 100.00 |
| One-pack (lead stabiliser, IKA 514 PDG, ex IKA) | 3.33 |
| Processing aid (Bärorapid 10F, *ex* Bärlocher) Chlorinated polyethylene | 0.67 |
| (ONGRO CPE^{®} HI 3602, *ex* BorsodChem Rt) | 4.00 |
| Calcium carbonate (Polcarb SB, ex Imerys) | 5.33 |
| Pigment (Yellow PS 2.1.79 ex Clariant) | 0.50 |

Example B2: unplasticized PVC corrugated electrical conduit according to the present invention, outside diameter 14.9 mm, wall thickness 1.6 mm (including profile). The conduit has been obtained by extrusion, followed by after treatment in a corrugator, of the following composition:

| **Ingredient** | **Amount (phr)** |
|---|---|
| Poly(vinyl chloride) (Solvin^{®} 264, *ex* Solvin) | 100.0 |
| One-pack (lead stabiliser, IKA 514 PDG, *ex* IKA) | 3.33 |
| Processing aid (Bärorapid 10F, *ex* Bärlocher) | 0.67 |
| Zinc borate (Firebrake ZB^{®}, ex Luzenac) | 3.13 |
| Aluminium hydroxide (Apyral 40CD^{®}, *ex* Nabaltec) | 5.20 |
| Calcium carbonate (Socal U1S2 *ex* Solvay) | 8.00 |
| Pigment (Yellow PS 2.1.79 *ex* Clariant) | 0.50 |

*Results.* The results are depicted in the table below. A lower minimum extinction indicates more smoke production, and is indicative for better flame retardant and smoke suppressing properties.

| Sample | Type of experiment | Minimum extinction |
|---|---|---|
| A1 | Reference | 0.234 |
| A2 | According to embodiments of the invention | 0.324 |
| B1 | Reference | 0.483 |
| B2 | According to embodiments of the invention | 0.604 |

The mechanical properties of the unplasticized PVC conduits according to A2 and B2 are at least comparable to those of the reference products A1 and B1, respectively.

### Conclusions/Remarks:

The smooth conduit according to embodiments of the invention (A2) has significantly better smoke suppressing properties and flame retardancy than the reference (A1).

Likewise, the corrugated conduit according to embodiments of the invention (B2) has significantly better smoke suppressing properties and flame retardancy than the reference (B1).

Following the recommendation in Annex B of the IEC 61034-2:2005, the corrugated conduit according to an embodiment of the invention (A2) can be considered as a "low smoke" product (product light transmittance > 60%).

It should be noted that the above-mentioned embodiments illustrate rather than limit the invention, and that those skilled in the art will be able to design many alternative embodiments without departing from the scope of the appended claims. Use of the verb "to comprise" and its conjugations does not exclude the presence of elements or steps other than those stated in a claim. The term "comprise" includes also embodiments wherein the term "comprises" means "consists of". The article "a" or "an" preceding an element does not exclude the presence of a plurality of such elements. The mere fact that certain measures are recited in mutually different dependent claims does not indicate that a combination of these measures cannot be used to advantage.

## Claims

1. An unplasticized PVC composition comprising poly(vinyl chloride), calcium carbonate, zinc borate, and one or more metal hydroxides selected from the group consisting of aluminium hydroxide and magnesium hydroxide.

2. The composition according to claim 1, wherein calcium carbonate is present in an amount of 2-10 phr, preferably in an amount of 5-8 phr, wherein "phr" is defined as "parts by weight per hundred weight parts of the poly(vinyl chloride)".

3. The composition according to one of the preceding claims, wherein zinc borate is present in an amount of 1-7 phr, preferably in an amount of 3-6 phr.

4. The composition according to any one of the preceding claims, wherein the one or more metal hydroxides taken together are present in a total amount of 1-9 phr, preferably in a total amount of 3-6 phr.

5. The composition according to any one of the preceding claims, wherein calcium carbonate comprises precipitated calcium carbonate.

6. The composition according to one of the preceding claims, further comprising 1-23 phr, preferably 1-8 phr, of one or more unplasticized PVC additives.

7. The composition according to one of the preceding claims, wherein the composition consists of:
a. calcium carbonate in an amount of 2-10 phr, preferably 5-8 phr;
b. zinc borate in an amount of 1-7 phr, preferably 3-6 phr;
c. aluminium hydroxide and/or magnesium hydroxide in a total amount of 1-9 phr, preferably 3-6 phr;
d. one or more unplasticized PVC additives in a total amount of 1-23 phr, preferably 1-8 phr; and
e. poly(vinyl chloride) to 100% by weight of the total composition.

8. A tube-like article obtainable by providing the composition according to any one of claims 1-7 with a tube-like shape.

9. The tube-like article according to claim 8, wherein the tube-like article is obtainable by extrusion of the composition according to any one of claims 1-7.

10. The tube-like article according to claim 8, wherein the tube-like article is obtainable by injection moulding of the composition according to one of claims 1-7.

11. The tube-like article according to one of claims 8-9, wherein the tube-like article is an electrical conduit.

12. The tube-like article according to claim 8 or claim 10, wherein the tube-like article is a fitting for an electrical conduit.

13. Use of the unplasticized PVC composition according to any one of claims 1-7 for producing unplasticized PVC articles.
